# EUROPEAN PATENT APPLICATION

(11) **EP 2 590 060 A1**
(43) Date of publication of application: **08.05.2013**
(21) Application number: 12190884.2
(22) Date of filing: 31.10.2012
(51) Int. Cl.: G06F 3/0354, G06F 3/01, G06F 3/0481, H04N 13/00

(54) **3D user interaction system and method**

(30) Priority: 03.11.2011 CN 201110343598; 03.11.2011 CN 201110343596; 03.11.2011 CN 201110343305; 03.11.2011 CN 201110343930
(71) Applicant: SuperD Co. Ltd., 518053 Shenzhen (CN)
(72) Inventor: Song, Lei, 518053 Shenzhen (CN); Liu, Ning, 518053 Shenzhen (CN); Ge, Zhang, 518053 Shenzhen (CN)
(74) Representative: Lohr, Georg

(57) **Abstract**

A method is provided for a 3D user interaction system containing a terminal device and an operating pen. The method includes displaying a 3D user interface including a 3D icon on a screen of the terminal device, and determining 3D position of a contact portion of the operating pen based on obtained 3D position information of the contact portion. The method also includes comparing the 3D position of the contact portion and 3D position of a surface of the 3D icon, determining whether there is a virtual touch between the operating pen and the 3D icon. Further, the method includes, when there is the virtual touch between the operating pen and the 3D icon, adjusting parallax of the 3D icon to simulate a visual change of the 3D icon being pressed, and indicating a user interaction to the terminal device corresponding to the virtual touch.

## Description

### CROSS-REFERENCES TO RELATED APPLICATIONS

This application claims the priority of Chinese patent application number 201110343598.0, filed on November 3, 2011, Chinese patent application number 201110343596.1, filed on November 3, 2011, Chinese patent application number 201110343305.9, filed on November 3, 2011, and Chinese patent application number 201110343930.3, filed on November 3, 2011, the entire contents of all of which are incorporated herein by reference.

### FIELD OF THE INVENTION

The present invention generally relates to 3D technologies and, more particularly, to the methods and systems with 3D user interaction capabilities.

### BACKGROUND

Currently, various solutions for man-machine interactive systems are based on 2D displays. That is, the direct display effect of a user operation is shown in 2D. Some may use shadow and perspective effects, such as objects appearing larger when closer and smaller when farther, to approximately simulate a three-dimensional feel.

With the recent development of the 3D display technology, such 2D display interface may introduce series of operation results against a user's common sense, because the direct display effect brought to the user by 3D is that all the operation interfaces are either protruding out or recessing from the display screen. Nowadays commonly-used fingers or stylus pens on touch screens can only perform 2D operations on the display screen. For true 3D user interfaces, i.e., interfaces floating in the air or recessing from the screen, these traditional approaches will make the user feel not being able to really touch the actual interfaces.

Although the virtual reality (VR) technology can use data gloves or the likes to operate on objects in space, this technology is complex to implement, such as requiring high precision data gloves and computer systems capable of modeling the entire virtual space. Sometimes, special helmets may also be needed in order to shield the interference to the virtual environment by the physical environment. Accordingly, it may be inconvenient for the user to use the VR technology, and the cost may also be quite high. Thus, such technology may be unsuitable for use on many devices, especially mobile devices.

The disclosed methods and systems are directed to solve one or more problems set forth above and other problems.

### BRIEF SUMMARY OF THE DISCLOSURE

One aspect of the present disclosure includes a method for a 3D user interaction system including a terminal device and an operating pen. The method includes displaying a 3D user interface including a 3D icon on a screen of the terminal device, and determining 3D position of a contact portion of the operating pen based on obtained 3D position information of the contact portion of the operating pen. The method also includes comparing the 3D position of the contact portion of the operating pen and 3D position of a surface of the 3D icon, determining whether there is a virtual touch between the operating pen and the 3D icon. Further, the method includes, when there is the virtual touch between the operating pen and the 3D icon, adjusting parallax of the 3D icon to simulate a visual change of the 3D icon being pressed, and indicating a user interaction to the terminal device corresponding to the virtual touch.

Another aspect of the present disclosure includes a terminal device for 3D user interaction with an operating pen. The terminal device includes a screen, an interaction control unit, and an image processing unit. The screen is configured to display a 3D user interface including a 3D icon. The interaction control unit is configured to determine 3D position of a contact portion of the operating pen based on obtained 3D position information of the contact portion of the operating pen, to compare the 3D position of the contact portion of the operating pen and 3D position of a surface of the 3D icon, and to determine whether there is a virtual touch between the operating pen and the 3D icon. Further, the image processing unit is configured to, when the interaction control unit determines the virtual touch between the operating pen and the 3D icon, adjust parallax of the 3D icon to simulate a visual change of the 3D icon being pressed. The interaction control unit is further configured to indicate a user interaction to the terminal device corresponding to the virtual touch.

Another aspect of the present disclosure includes an operating pen for 3D user interaction with a terminal device. The operating pen includes a housing, a communication unit, a retractable head, a positioning unit, and a force feedback unit. The retractable head is coupled to the housing in a retractable fashion and having a contact portion at top to be used by a user to interact with a 3D user interface including a 3D icon displayed on a screen of the terminal device. The positioning unit is configured to generate 3D position information of the contact portion and to provide the 3D position information to the terminal device for determining whether there is a virtual touch between the operating pen and the 3D icon. Further, a force feedback unit is configured to receive a force feedback instruction from the terminal device and to simulate a physical touch when there is the virtual touch.

Other aspects of the present disclosure can be understood by those skilled in the art in light of the description, the claims, and the drawings of the present disclosure.

### BRIEF DESCRIPTION OF THE DRAWINGS

Figures 1 and 2 illustrate an exemplary 3D user interaction system consistent with the disclosed embodiments;

Figures 3A and 3B illustrate an exemplary 3D operating pen consistent with the disclosed embodiments;

Figures 4A and 4B illustrate an exemplary 3D display system consistent with the disclosed embodiments;

Figure 5 illustrates an exemplary operation process consistent with the disclosed embodiments;

Figures 6A and 6B illustrate a pixel with parallax displayed on the screen consistent with the disclosed embodiments;

Figure 7 illustrates an exemplary process for simulating the operating pen entering the screen consistent with the disclosed embodiments; and

Figure 8 illustrates an exemplary configuration for calculating the retraction length consistent with the disclosed embodiments.

### DETAILED DESCRIPTION

Reference will now be made in detail to exemplary embodiments of the invention, which are illustrated in the accompanying drawings. Wherever possible, the same reference numbers will be used throughout the drawings to refer to the same or like parts.

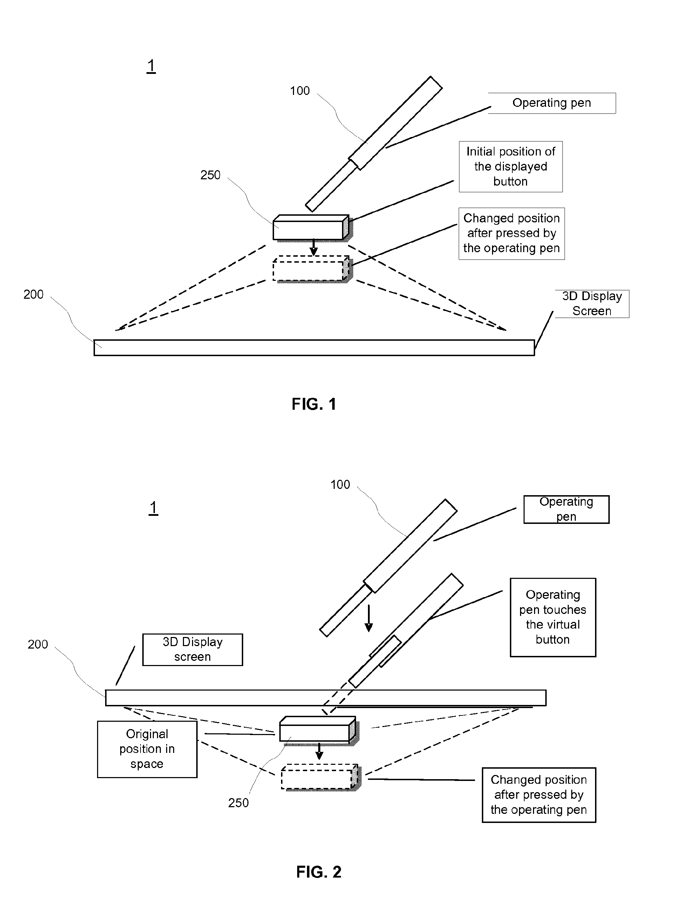

Figures 1 and 2 illustrate an exemplary 3D user interaction system 1 consistent with the disclosed embodiments. As shown in Figure 1, the 3D user interaction system 1 includes an operating pen 100 and a 3D display system 200. Other devices may also be included. Operating pen 100 may be coupled to the 3D display system 200 such that the operating pen 100 may be coupled to the 3D display system 200 can exchange information to complete 3D user interactions.

The 3D display system 200 may be any terminal device having a 3D display screen to display an operated device 250 as a part of a 3D user interface, and a user may use the operating pen 100 to interact with the operated device 250 so as to use the 3D user interface provided by the 3D display system 200. The operated device 250 may include any appropriate 3D user interface icon, such as a button, an arrow, a key, a tab, an image, or other GUI device. More than one operated device 250 may be included.

To the viewer/user, the operated device 250 may be displayed as protruding and recessing from the display screen. To allow the user to have more realistic feel while performing a touch operation on the protruding operated device 250, when the top of the operating pen 100 reaches the surface of the operated device 250, i.e., a virtual touch, visual changes of the operated device 250 being pressed may be simulated and a certain reaction force is fed back to the user, as shown in Figure 1. Thus, the user may have more realistic feel about the touch control operation on the operated device 250 using the operating pen 100.

On the other hand, when performing a touch operation on the recessing operated device 250, as shown in Figure 2, the top of the operating pen 100 touches the display screen before reaching the surface of the operated device 250. To allow the user to have more realistic feel, the top portion of the operating pen 100 may be configured as retractable, and a 3D image of the retracted portion of the operating pen 100 may be displayed on the display screen. The 3D position of the top portion without retraction may be calculated to determine whether a virtual touch occurs, i.e., when the virtual top of the operating pen 100 reaches the surface of the operated device 250. If the virtual touch occurs, similar display and force feedback mechanisms may also be used.

As used herein, 3D position information may refer to 3D position or any other information that can be used to calculate the 3D position, such as gesture and the retraction length. The 3D position may be represented by 3D coordinates, such as x, y, and z coordinates, or by polar coordinates, such as a length and azimuth. The coordinates representing the 3D position may be determined by using the display screen plane as the reference system, i.e., the coordinates relative to the display screen. For example, for a smart phone, a midpoint or an end point of the screen of the smart phone can be used as the origin of coordinates, the direction perpendicular to the screen can be the Z axis, and the plane of the screen can be the plane of the X axis and Y axis.

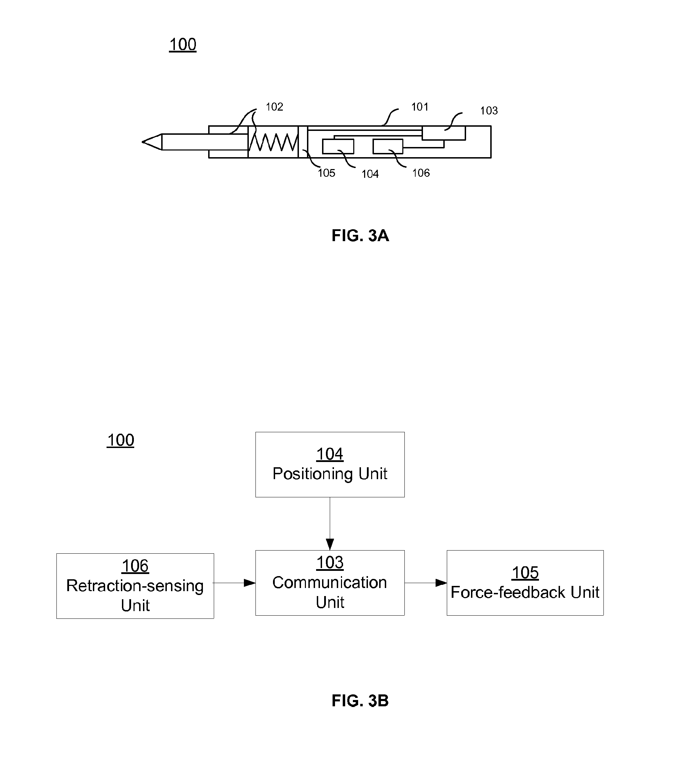

The operating pen 100 may include any appropriate 3D input device in a variety of shapes, such pen, rod, or other human-maneuverable object. Figures 3A and 3B illustrate an exemplary operating pen 100.

As shown in Figure 3A, operating pen 100 may include a housing 101, retractable head 102, a communication unit 103, a positioning unit 104, a force-feedback unit 105, and retraction-sensing unit 106. Certain components may be omitted and other components may be added. For example, the operating pen 100 may also include accessory components, such as batteries and charging unit (not shown), etc., or the operating pen 100 may be modified or simplified depending on particular applications.

Housing 101 may be in any easy-to-grip shape, such as a pen-like shape, and can be made from any appropriate materials, such as metal or plastic. Retractable head 102 is coupled to the housing 101 in a retractable fashion. A variety of retractable structures may used, such as a spring based structure. Further, the top of the retractable head 102 that touches the 3D display system 200 is called the contact portion. The far end of the retractable head 102 away from the housing 101 may have a cone shape, and the tip of the cone may be used as the contact portion of the retractable head 102, which is also called the contact point of the operating pen 100.

As shown in Figure 3A and Figure 3B, the communication unit 103 is electrically coupled to the positioning unit 104, the force-feedback unit 105, and the retraction-sensor unit 106 to facilitate information exchange between the operating pen 100 and the 3D display system 200. The information exchange may be carried out by using wireless communication means, such as Bluetooth and wireless USB, and/or wired communication means, such as I2C and USB, etc.

Positioning unit 104 is configured to detect in real-time the position and gesture of the operating pen 100 in space, and to send the detected 3D position information to the communication unit 103 for transmission. The positioning unit 104 may include certain sensors, such as motion trajectory sensors and gesture detection sensors. For example, in some of the existing mobile devices, such as the iPhone, a gyro sensor may be used to obtain motion trajectory data (e.g., position information of the operating pen 100 in space), while an accelerometer may be used to obtain the azimuth data (e.g., gesture information of the operating pen 100). Other sensors may also be used, such as a geomagnetic sensor.

When the operating pen is in an initial state, the initial position of the motion trajectory can be set to the relative position of the positioning unit 104 (or other units) in the reference system. The 3D positioning information detected by the positioning unit 104 may include the 3D position information and the gesture information and other calculated information, such as the 3D position information of the tip of the operating pen 100 or intermediate results calculated based on the 3D position information and the gesture information.

Force-feedback unit 105 is configured to, based on a force-feedback instruction received by the communication unit 103, perform actions to simulate a force feedback, i.e., certain physical reaction to a user action. For example, force-feedback unit 105 may include an electro-mechanical module and, after receiving the force-feedback instruction, simulate a vibration caused by pressing a real button. The operator may then physically feel the operations on the 3D interface, e.g., an immersive feeling. The electro-mechanical module may be an electric vibration motor, an artificial muscle membrane, or any other vibration-simulating device.

Retraction-sensing unit 106 is configured to detect in real-time the retraction length of the tip of the operating pen 100 (i.e., the retreated length of the retractable head 102) and to send the detected retraction information to the communication unit 103 for transmission. The retraction-sensing operation may be implemented by a pressure sensor.

For example, the retractable head 102 may include the tip of the operating pen 100 and an elastic device coupled between the tip and the pressure sensor, such as a spring. When the retraction length of the tip of the operating pen 100 changes, the pressure on the pressure sensor by the elastic device also changes, and the retraction-sensing unit 106 may then convert the pressure information into a corresponding electrical signal and send the converted information to the communication unit 103 for transmission. Thus, the retraction length of the retractable head 102 of the operating pen 100 can be determined based on the value of the electrical signals. Of course, other detection structures may also be used, such as a photoelectric detector.

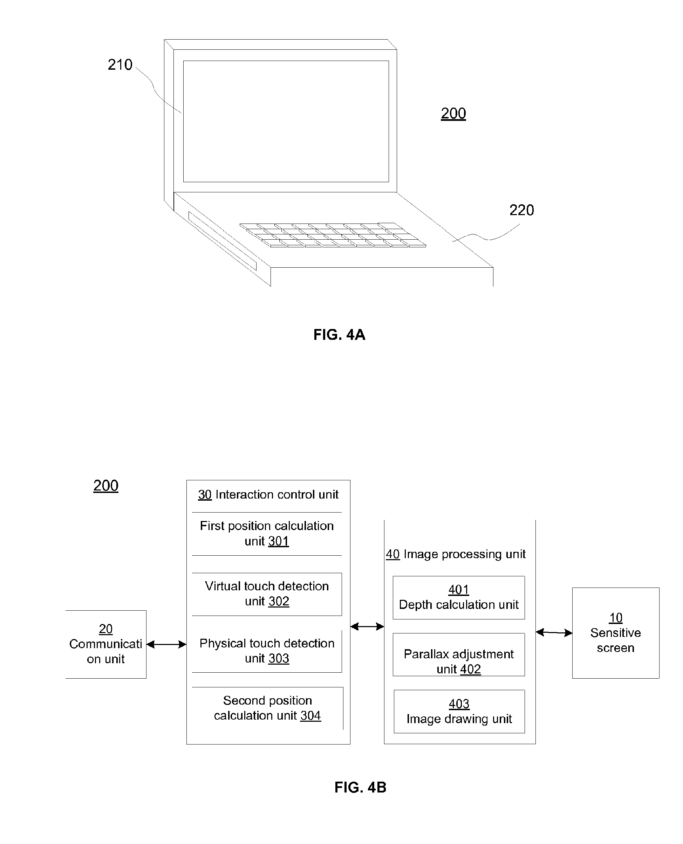

Returning back to Figures 1 and 2, the 3D display system 200 may include any appropriate device capable of providing 3D user interfaces and allow the operating pen 100 to interact with the 3D user interfaces. Figures 4A and 4B illustrate an exemplary 3D display system 200.

As shown in Figure 4A, the 3D display system 200 may include a 3D display screen 210 and a base 220. The 3D display system 200 may include any appropriate device capable of processing and displaying 2D and 3D images, such as a computer, a television set, a smart phone, a tablet computer, or a consumer electronic device. Although the 3D display system 200 is shown as a notebook computer, any terminal device with computing power may be included.

The 3D display screen 210 may include any appropriate type of display screen based on plasma display panel (PDP) display, field emission display (FED), cathode ray tube (CRT) display, liquid crystal display (LCD), organic light emitting diode (OLED) display, or other types of displays. Further, the 3D display screen 210 may also be touch-sensitive, i.e., a touch screen. Other display types may also be used.

The base 220 may include any appropriate structures and components to support operations of the 3D display system 200. For example, base 120 may include a controller to control operation of the 3D display system 200, together with other devices such as random access memory (RAM), read-only memory (ROM), input/output interfaces, sensor driving circuitry, communication interfaces, and storage/database, etc. Other devices may be added and certain devices may be removed.

More particularly, as shown in Figure 4B, the 3D display system 200 may include a sensitive screen 10 (e.g., 3D display screen 210), a communication unit 20, an interaction control unit 30, and an image processing unit 40. Other units may also be included.

The sensitive screen 10 can display 3D images of the operated device 250 and may be simply referred to as the screen 10. The term "sensitive screen" may refer to a display screen with certain awareness of one or more interaction with the display screen, such as a touch. The communication unit 20 is configured to facilitate information exchange between the interaction control unit 30 and the operating pen 100.

The interaction control unit 30 may control the 3D interaction operations of the operating pen 100 and the 3D display system 200 or the interactions between the operating pen 100 and the operated device 250. Further, interaction control unit 30 may include a first position calculation unit 301, a virtual touch detection unit 302, a physical touch detection unit 303, and a second position calculation unit 304, etc.

The first position calculation unit 301 may be configured to determine the 3D position of the contact portion of the operating pen 100 based on the 3D position information of the operating pen 100 obtained in real-time. When the operating pen 100 does not touch the screen 10, the 3D position of the contact portion may be determined based on 3D position information received from the operating pen 100, or based on 3D position information of a particular portion of the operating pen 100, azimuth information of the operating pen 100, and the distance between the contact portion and the particular portion.

When the operating pen 100 touches the screen 10, the 3D position of the contact portion may be determined based on the retraction length of the retractable head 102, the azimuth of the operating pen 100, and the contact location/position between the operating pen 10 and the screen 10. The retraction length of the retractable head 102 may also be determined based on the retraction length information sent from the operating pen 100. It should be noted that, before the operating pen 100 touches the screen 10, the 3D position of the contact portion is real position; and after the operating pen 100 touches the screen 10, the 3D position of the contact portion is virtual.

The virtual touch detection unit 302 is configured to determine whether a virtual touch occurs between the operating pen 100 and the operated device 250 in real-time, based on the 3D position of the contact portion of the operating pen 100 and the 3D position of the surface of the operated device 250. If a virtual touch occurs, the parallax adjustment unit in the image processing unit 40 is activated, and a force-feedback instruction is sent to the operating pen 100 through the communication unit 20. Further, based on the depth change of the surface of the operated device 250, the virtual touch detection unit 302 may determine whether the operating pen 100 completes the click operation on the operated device 250. If the click operation is completed, a click command on the operated device 250 may also be generated.

The physical touch detection unit 303 is configured to activate the image drawing unit in the image processing unit 40 when the detection unit 303 detects that the operating pen 100 touches the screen 10. The detection unit 303 also provides the first position calculation unit 301 and the second position calculation unit 304 with information about the location where the operating pen 100 touches the screen 10.

Further, the second position calculation unit 304 is configured to calculate the virtual 3D position of the retracted portion of the operating pen 100 based on the 3D position of the contact portion of the operating pen 100, the touch position between the operating pen 100 and the screen 10, and the mathematic model of the retractable head 102 of the operating pen 100.

That is, based on the real-time 3D position information of the retracted portion of the operating pen 100 and the touch position between the operating pen 100 and the screen 10, the virtual 3D position of the retracted portion of the operating pen 100 can be calculated. For example, based on the real-time retraction length of the retractable head 102 of the operating pen 100, the azimuth of the operating pen 100, and the touch position between the operating pen 100 and the screen 10, the virtual 3D position of at least one point (e.g., the contact point) on the operating pen 100 can be calculated. Further, combined with the touch position between the operating pen 100 and the screen 10 and the mathematic model of the retractable head 102 of the operating pen 100, the virtual 3D position of the retracted portion of the operating pen 100 can be calculated. The virtual 3D position of the contact point may also be derived or calculated from the real-time 3D position and gesture information of the operating pen 100, and the retraction length of the retractable head 102 may be determined based on the retraction length sent from the operating pen 100.

Further, the image processing unit 40 may include a depth calculation unit 401, a parallax adjustment unit 402, and an image drawing unit 403. The depth calculation unit 401 is configured to determine the depth of the surface of the operated device 250 relative to the screen 10 based on the parallax of the 3D image of the operated device 250. The depth calculation unit 401 may also provide the depth information to the virtual touch detection unit 302.

The parallax adjustment unit 402 is configured to simulate the change on depth of the operated device 250 when the operated device 250 is pressed, by adjusting the parallax of the 3D image of the operated device 250. For example, the parallax adjustment unit 402 may use the real-time depth of the contact portion of the operating pen 100 relative to the screen 10 as the depth of the surface of the operated device 250, and adjust the parallax of the 3D image of the operated device 250 based on the depth.

Further, the image drawing unit 403 is configured to draw or render an image of the retracted portion of the operating pen 100 based on the virtual 3D position of the retracted portion of the operating pen 100. The image drawing unit 403 may draw a 3D image of the retracted portion of the operating pen 100. For example, the image drawing unit 403 may set the 3D positions of the left eye and right eye of the user viewing the screen 10 as the left and right cameras, and the screen 10 as the zero parallax surface to draw a left image and a right image of retracted portion of the operating pen 100. The 3D positions of the left eye and right eye of the user may be configured or may be obtained by tracking. Other image processing operations may also be performed by the image processing unit 40.

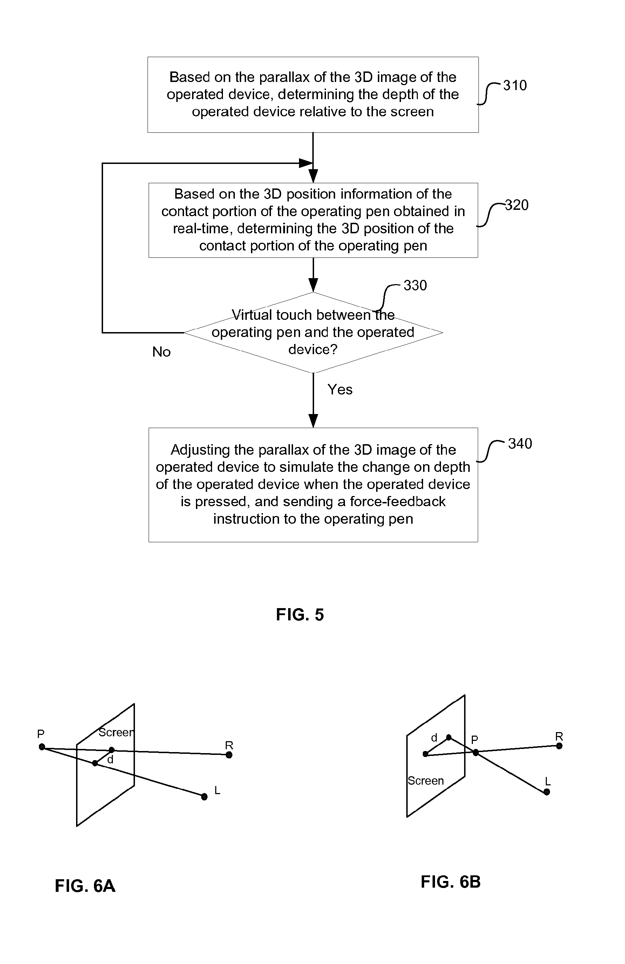

Figure 5 illustrates an exemplary operating process for a touch operation on the 3D operated device 250 on the display screen 10. As shown in Figure 5, the depth of the operated device 250 relative to the screen 10 is determined based on the parallax of the 3D image of the operated device 250 (310).

For example, the 3D effect of the operated device 250 may be created by the parallax between the left image and the right image of the 3D image. Figure 6A shows a pixel *P* with a parallax *d* displayed as a recessing point from the display screen and Figure 6B shows the pixel *P* with the parallax *d* displayed as a protruding point from the display screen. The parallax *d* is the difference between the coordinates of the pixel *P* on the left image and the coordinates of the pixel *P* on the right image. Thus, based on the parallax *d* of the pixel *P* and the 3D positions of the left and right eyes, the depth of the pixel *P* relative to the screen, i.e., the vertical distance, can be calculated. The depth relative to the screen can be positive when the pixel *P* is protruding or negative when the pixel *P* is recessing, or the depth can be negative when the pixel *P* is protruding or positive when the pixel *P* is recessing.

The 3D positions of the left eye and the right eye, and the distance between the left eye and the right eye may be pre-configured. If a head tracking device is used, the 3D positions of the left eye and the right eye can be detected by the tracking device and the parallax can be dynamically calculated.

Returning to Figure 5, because the 2D position of the operated device 250 is known (e.g., from system functions or other display related information), after the depth of the operated device 250 is determined, the 3D position of the operated device 250 is determined.

Further, the 3D position of the contact portion of the operating pen 100 is determined based on the 3D position information of the contact portion of the operating pen 100 obtained in real-time (320). The 3D position information of the contact portion of the operating pen 100 may be sent from the operating pen 100 and may include the 3D coordinates of the contact portion of the operating pen 100 or other information to derive the 3D coordinates.

When the operating pen 100 does not touch the screen 10, the 3D position of the contact portion may be determined based on 3D coordinate information of the contact portion received from the operating pen 100, or based on 3D coordinate information of another portion of the operating pen 100, azimuth information of the operating pen 100 (e.g., the angle between the operating pen 100 and the screen 10 and the angle between the projection of operating pen 100 on the screen10 and the X-axis or Y-axis) and the distance between the contact portion and the another portion. Such calculation may be performed by the 3D display system 200 or by the positioning unit 104 of the operating pen 100.

When the operating pen 100 touches the screen 10, the 3D position of the contact portion of the operating pen 100 may also be determined using the above method. Further, after the operating pen 100 touches the screen 10, the contact location between the operating pen 10 and the screen 10 and the retraction length of the retractable head 102 can be obtained. The 3D position of the contact portion of the operating pen 100 may be more accurately calculated based on the retraction length of the retractable head 102, the azimuth of the operating pen 100, and the contact location between the operating pen 10 and the screen 10. The retraction length of the retractable head 102 may be determined based on the retraction length information sent from the operating pen 100.

Further, based on the 3D position of the contact portion of the operating pen 100 and the 3D position of the surface of the operated device 250 display on the screen 10, the 3D display system (e.g., the virtual touch detection unit 302) determines whether a virtual touch occurs between the operating pen 100 and the operated device 250 (330). For example, if the 3D position of the contact portion of the operating pen 100 coincides with or goes beyond the 3D position of the surface of the operated device 250, it is determined that a virtual touch occurs between the operating pen 100 and the operated device 250.

If a virtual touch does not occur (330; No), the process continues from 320. On the other hand, if a virtual touch occurs (330; Yes), the parallax of the 3D image of the operated device 250 is adjusted to simulate the change on depth of the operated device 250 when the operated device 250 is pressed, and a force-feedback instruction is sent to the operating pen 100 (340).

Further, based on the depth change of the surface of the operated device 250, the 3D display system (e.g., the virtual touch detection unit 302) may determine whether the operating pen 100 completes the click operation on the operated device 250 (e.g., certain buttons may need to be pressed down by a certain distance before a click operation is deemed as completed). If the click operation is completed, the click command on the operated device 250 may also be generated.

The depth of the contact portion of the operated device 250 relative to the screen 10, obtained in real-time, may be used as the depth of the operated device 250, and such depth can be used to adjust the parallax of the 3D image of the operated device 250. For example, the coordinates of the pixels from the left image and/or right image of the operated device 250 may be shifted horizontally. The displayed operated device 250 may appear as being pressed. Also for example, if the retraction length is small, display of intermediate process may omitted, the 3D image of the operating device 250 stopping at the final position after being pressed may be directly displayed. Alternatively, several 3D images of the operating device 250 at intermediate positions and at the final position may be displayed in sequence.

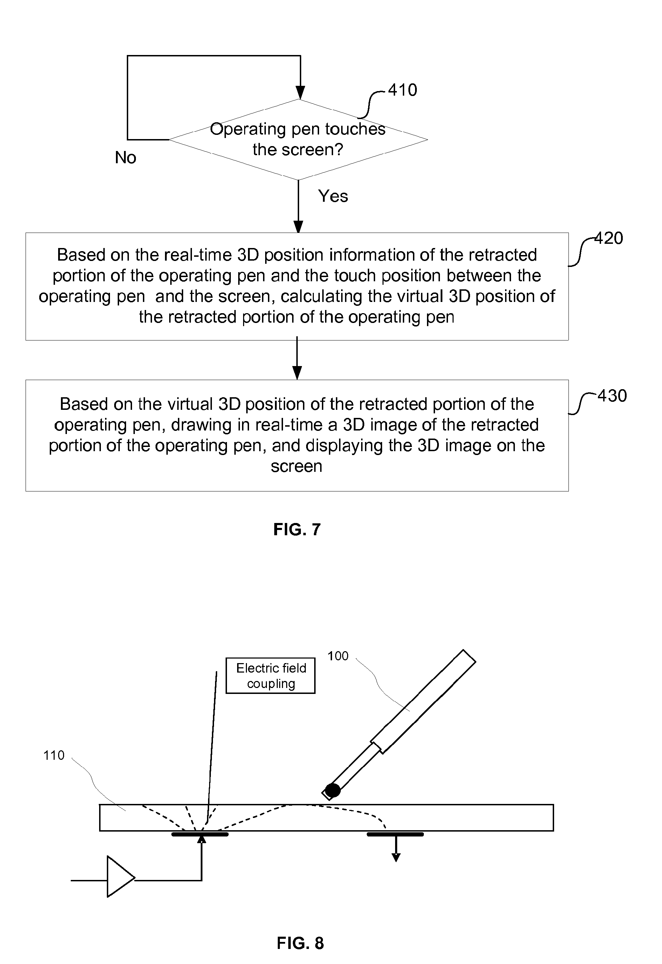

Figure 7 illustrates an exemplary process for simulating the operating pen 100 entering the screen 10. As shown in Figure 7, the 3D display system 200 may detect whether the operating pen 100 touches the screen 10 (410). If the operating pen 100 does not touch the screen 10 (410; No), the detection is continued.

If the operating pen 100 touches the screen 10 (410; Yes), based on the real-time 3D position information of the retracted portion of the operating pen 100 and the touch position between the operating pen 100 and the screen 10, the virtual 3D position of the retracted portion of the operating pen 100 may be calculated (420).

When calculating the virtual 3D position of the retracted portion of the operating pen 100, the virtual 3D position of at least one point (e.g., the contact point) on the operating pen 100 can be calculated based on the real-time retraction length of the retractable head 102 of the operating pen 100, the azimuth of the operating pen 100, and the touch position between the operating pen 100 and the screen 10. Further, the virtual 3D position is combined with the touch position between the operating pen 100 and the screen 10 and the mathematic model of the retractable head 102 of the operating pen 100 to calculate the virtual 3D position of the retracted portion of the operating pen 100.

Alternatively, based on the received real-time 3D position information of the operating pen 100, the 3D position of the contact portion of the operating pen 100 may be derived or calculated. The 3D position of the contact portion is combined with the touch position between the operating pen 100 and the screen 10 and the mathematic model of the retractable head 102 of the operating pen 100 to calculate the virtual 3D position of the retracted portion of the operating pen 100. The retraction length of the retractable head 102 may be determined based on the retraction length sent from the operating pen 100.

Further, based on the virtual 3D position of the retracted portion of the operating pen 100, a 3D image of the retracted portion of the operating pen 100 is drawn or rendered in real-time, and the rendered 3D image is displayed on the screen 10. During the drawing process, the 3D positions of the left eye and right eye of the user viewing the screen 10 may be set as the left and right cameras, and the screen 10 can be set as the zero parallax surface, a left image and a right image of retracted portion of the operating pen 100 can then be drawn. Afterwards, the screen 10 may display the 3D image of the retracted portion of the operating pen 100, and the user can feel the appearance that the operating pen 100 enters the screen 10, enhancing the realistic feel for the user.

Thus, a touch control operation combined with 3D display can be realized. To allow the user to have more realistic feel and more realistic experience of the interaction between the operating pen 100 and the screen 100, a positioning unit is configured in the operating pen 100 for detecting motion of the operating pen 100 so as to detect the position and gesture of the operating pen 100 in real-time. Returning to Figure 1, for the button protruding from the screen, even when the operating pen 100 does not touch the screen, the user may see the operating pen 100 touches the button. The display of the button can then be changed upon the detection of the virtual touch, such that the button looks like being pressed down. Certain touch feeling can also be given to the user by the force feedback unit. Further, for the button recessing from the screen, as shown in Figure 2, even when the operating pen 100 has been in contact with the screen, the user may see the button untouched by the operating pen 100. The head portion of the operating pen 100 can automatically retreat or retract along with the action of the user and sends the retraction length to the 3D display system. The 3D display system draws the 3D image of the retracted portion and displays the 3D image on the screen, such that the user may see the operating pen 100 enters the screen to touch the button. At the same time, when the operating pen 100 performs other actions, such as moves from left to right, the virtual operating pen also moves from left to right. Further, by detecting a virtual touch, it can be determined that the virtual operating pen hit the button, and parallax adjustment on the button and the force feedback can then be performed.

In certain embodiments, the force-feedback mechanism may be omitted. That is, the operating pen 100 does not have a force-feedback unit and the 3D display system does not perform force feedback related processing.

Under certain circumstances, only those operated devices 250 protruding from the screen 10 are operated on. The structures and processing related to the retraction mechanism may be omitted. For example, structures such as the retractable head 102 and the retraction sensing unit 106 in the operating pen 100, and the second position calculation unit 304 and image drawing unit 403 in the 3D display system 200 may be omitted, and processing such as retraction length calculation and drawing virtual operating pen can also be omitted.

Under certain other circumstances, only those operated devices 250 recessing from the screen 10 are operated on. The positioning unit 104 may omit any sensor for motion trajectory detection, because the gesture of the operating pen, retraction length, and the touch position between the operating pen and the screen can provide sufficient information to complete virtual touch detection.

In certain embodiments, the 3D interaction does not involve touch operations on the operated device 250 by the operating pen 100, but only involve operations by the virtual operating pen entered into the screen 10. Certain simplification of the structures may be implemented.

For example, in the operating pen 10, the positioning unit 104 may include sensors only for gesture detection. In the 3D display system 200, the interaction control unit 30 may be modified to include only a physical touch detection unit and a position calculation unit.

The physical touch detection unit is configured to, when detecting that the operating pen 100 touches the screen 10, activate the image drawing unit in the image processing unit 40 and to inform the touch position to the position calculation unit.

The position calculation unit is configured to, based on the real-time 3D position information of the retracted portion of the operating pen 100 and the touch position between the operating pen 100 and the screen 10, calculate the virtual 3D position of the retracted portion of the operating pen 100. For example, based on the real-time retraction length of the retractable head 102 of the operating pen 100, the azimuth of the operating pen 100, and the touch position between the operating pen 100 and the screen 10, the virtual 3D position of at least one point (e.g., the contact point) on the operating pen 100 can be calculated. Further, this virtual 3D position is combined with the touch position between the operating pen 100 and the screen 10 and the mathematic model of the retractable head 102 of the operating pen 100 to calculate the virtual 3D position of the retracted portion of the operating pen 100. The virtual 3D position of the contact point may also be derived or calculated from the real-time 3D position and gesture information of the operating pen 100, and the retraction length of the retractable head 102 may be determined based on the retraction length sent from the operating pen 100.

In certain embodiments, different mechanisms may be used to detect the 3D position of the operating pen 100. For example, other positioning devices may be used to replace or supplement the positioning unit 104 for detecting the position and gesture in the operating pen 100. The positioning devices may be used to detect the 3D position of the operating pen 100 relative to the screen 10 and to send the detected 3D position information to the 3D display system 200. These positioning devices may include, but not limited to, a tracking device, such as a camera, and infrared sensing devices.

The camera (tracking device) may be used to track and identify the operating pen 100, and to determine the 3D position information of the operating pen 100 to be sent to the 3D display system 200. The 3D position information may include 3D position of the contact portion or other portions of the operating pen 100 and the azimuth information of the operating pen 100.

The infrared sensing device may be placed on both the operating pen 100 and the 3D display system 200. The infrared sensing device on the operating pen 100 may be configured as a transmitter/receiver, and the infrared sensing device on the 3D display system may be a receiver/transmitter. Thus, either the operating pen 100 or the 3D display system can calculate the 3D position information of the operating pen 100.

The positioning devices may directly send the 3D position information to the interaction control unit 30, or may first send to the communication unit 20 and the communication unit 20 may then provide the information to the interaction control unit 30.

Further, the operating pen 10 may be modified not to include the retractable head, retraction-sensing unit, positioning unit, and force-feedback unit. The position and gesture information of the operating pen 100 is detected by the positioning devices. Further, only operated devices protruding from the screen may be used, such that the structures and processing related to the retraction can be omitted on the operating pen 100 and the 3D display system 200.

In certain embodiments, the operating pen 100 does not include a retraction-sensing unit, the retraction length after the operating pen 100 touches the screen 10 may be derived by a different mechanism. Figure 8 illustrate an exemplary configuration for calculating the retraction length.

As shown in Figure 8, a pressure sensing device 110 is placed on the surface of the screen 10. For example, the pressure sensing device 110 may be a capacitive screen. When the operating pen 100 come into contact with the capacitive screen, changes in the pressure on the capacitive screen by the operating pen 100 may cause change in the electric field of the capacitive screen. The change in the electric field may be detected and sent to the interaction control unit 30. Because the pressure on the capacitive screen corresponds to the retraction length of the top of the operating pen 100, the detected changes in the electric field (e.g., capacitor, voltage, etc.) can be used to calculate the retraction length and further the 3D position of the contact portion of the operating pen 100. That is, the retraction length of the top of the operating pen 100 can also be calculated based on the detection results from the pressure sensing device 110 on the surface of the screen 10.

In certain embodiments, the operating pen 100 does not include a retraction-sensing unit, the retraction length after the operating pen 100 touches the screen 10 may be derived by a different method.

Because there is no retraction-sensing unit, the retraction length information can no longer be detected after the operating pen 100 touches the screen 10. However, the positioning unit 104 in the operating pen 100 can detect in real-time the position and gesture of the operating pen 100. Thus, the retraction length can be calculated based on the detection results from the positioning unit 104.

More specifically, based on the 3D position and gesture information of the operating pen 100 as detected by the positioning unit 104, the depth of the contact portion of the operating pen 100 and the angle between the operating pen 100 and the screen 100 can be obtained, and the retraction length of the top of the operating pen 100 can be calculated based on the depth and the angle. After calculating the retraction length, combined with the azimuth of the operating pen 100 and the touch position between the operating pen 100 and the screen 10, the 3D position of the contact portion of the operating pen 100 can be calculated. This method combines the data from the positioning unit 104 and the actual touch position data, the positioning accuracy may be increased and certain undesired display effects such as a broken operating pen 100 may be avoided. Of course, the 3D position and gesture information may also be provided by other types of positioning devices.

By using the disclosed systems and methods, many new 3D user interaction applications can be implemented. The user can have a more realistic experience when interacting or control the 3D user interfaces. Other advantageous applications, modifications, substitutions, improvements are also obvious to those skilled in the art.

## Claims

1. A method for a 3D user interaction system including a terminal device and an operating pen, comprising:
displaying a 3D user interface including a 3D icon on a screen of the terminal device;
determining 3D position of a contact portion of the operating pen based on obtained 3D position information of the contact portion of the operating pen;
comparing the 3D position of the contact portion of the operating pen and 3D position of a surface of the 3D icon;
determining whether there is a virtual touch between the operating pen and the 3D icon;
when there is the virtual touch between the operating pen and the 3D icon, adjusting parallax of the 3D icon to simulate a visual change of the 3D icon being pressed; and
indicating a user interaction to the terminal device corresponding to the virtual touch.

2. The method according to claim 1, wherein:
the 3D icon is displayed as protruding from the screen; and
the virtual touch is determined before the operating pen touches the screen.

3. The method according to claim 2, wherein determining the 3D position of the contact portion of the operating pen further include:
determining the 3D position of the contact portion of the operating pen based on 3D position information received from the operating pen.

4. The method according to claim 1, wherein:
the 3D icon is displayed as recessing from the screen; and
the virtual touch is determined after the operating pen touches the screen at a touch position.

5. The method according to claim 4, further including:
drawing a 3D image of top portion of the operating pen; and
displaying the 3D image of the top portion of the operating pen on the screen to simulate the operating pen enters the screen after the operating pen touched the screen.

6. The method according to claim 4, wherein determining the 3D position of the contact portion of the operating pen further include:
determining the 3D position of the contact portion of the operating pen based on a retraction length of the top of the operating pen, an azimuth of the operating pen, and the touch position between the operating pen and the screen.

7. The method according to claim 1, wherein adjusting parallax of the 3D icon further includes:
determining a depth of the surface of the 3D icon as a depth of the contact portion of the operating pen relative to the screen; and
adjusting the parallax of the 3D icon based on the depth of the surface of the 3D icon.

8. The method according to claim 1, further including:
when it is determined that the operating pen touches the 3D icon, sending a force feedback instruction to the operating pen to simulate a physical touch.

9. The method according to claim 1, wherein indicating the user interaction further includes:
determining whether a click operation on the 3D icon is completed based on change of the depth of the surface of the 3D icon; and
when the click operation is completed, sending an icon-click command to the terminal device.

10. A terminal device for 3D user interaction with an operating pen, comprising:
a screen for displaying a 3D user interface including a 3D icon;
an interaction control unit configured to:
determine 3D position of a contact portion of the operating pen based on obtained 3D position information of the contact portion of the operating pen;
compare the 3D position of the contact portion of the operating pen and 3D position of a surface of the 3D icon; and
determine whether there is a virtual touch between the operating pen and the 3D icon; and
an image processing unit configured to, when the interaction control unit determines the virtual touch between the operating pen and the 3D icon, adjust parallax of the 3D icon to simulate a visual change of the 3D icon being pressed,
wherein the interaction control unit is further configured to indicate a user interaction to the terminal device corresponding to the virtual touch.

11. The terminal device according to claim 10, wherein:
the 3D icon is displayed as protruding from the screen;
the virtual touch is determined before the operating pen touches the screen; and
the interaction control unit is further configured to determine the 3D position of the contact portion of the operating pen based on the 3D position information received from the operating pen.

12. The terminal device according to claim 10, wherein:
the 3D icon is displayed as recessing from the screen;
the virtual touch is determined after the operating pen touches the screen at a touch position; and
the image processing unit is further configured to draw a 3D image of top portion of the operating pen and to display the 3D image of the top portion of the operating pen on the screen to simulate the operating pen enters the screen after the operating pen touched the screen.

13. The terminal device according to claim 12, wherein, to determine the 3D position of the contact portion of the operating pen, the interaction control unit is further configured to:
determine the 3D position of the contact portion of the operating pen based on a retraction length of the top of the operating pen, an azimuth of the operating pen, and the touch position between the operating pen and the screen.

14. The terminal device according to claim 10, wherein, to adjust the parallax of the 3D icon, the image processing unit is further configured to:
use a depth of the surface of the 3D icon as a depth of the contact portion of the operating pen relative to the screen; and
adjust the parallax of the 3D icon based on the depth of the surface of the 3D icon.

15. The terminal device according to claim 10, wherein, to indicate the user interaction, the interaction control unit is further configured to:
determine whether a click operation on the 3D icon is completed based on change of the depth of the surface of the 3D icon; and
when the click operation is completed, send an icon-click command to the terminal device.
